Europäisches Patentamt

(19) European Patent Office

Office européen des brevets

(11) Publication number : **0 280 670 B1**

(12) # EUROPEAN PATENT SPECIFICATION

(45) Date of publication of patent specification :
03.04.91 Bulletin 91/14

(51) Int. Cl.⁵ : **H04L 12/40**

(21) Application number : 88850064.2

(22) Date of filing : 23.02.88

(54) **Method and apparatus for transmitting information via a bus system.**

(30) Priority : 27.02.87 SE 8700840

(43) Date of publication of application :
31.08.88 Bulletin 88/35

(45) Publication of the grant of the patent :
03.04.91 Bulletin 91/14

(84) Designated Contracting States :
DE ES FR GB IT

(56) References cited :
EP-A- 0 004 376

(73) Proprietor : **TELEFONAKTIEBOLAGET L M ERICSSON**
S-126 25 Stockholm (SE)

(72) Inventor : **Lundh, Peter Carl Birger**
**Eksätravägen 218**
**S-127 33 Skärholmen (SE)**

## Description

### TECHNICAL FIELD

The present invention relates to a method and apparatus in a telecommunication system for transmitting information via a bus system with at least one bus. The method is primarily intended for transmitting packet-switched data, and the apparatus is primarily intended to be a part of a transit node of packet-switched connections. However, it cannot be entirely excluded that a method and apparatus in accordance with the invention can be utilised to advantage in other connections also.

### BACKGROUND ART

Many switching nodes of different kinds have been proposed for transmitting packet-switched data. From the German Offenlegungsschrift 2736858, for example, a switching node is already known for transmitting packet-switched data to and from a plurality of lines, this node including line units connected to the lines, a switch, links for transmitting packet-switched data between the switch and the line units, there also being central processors for traffic control, operation and maintenance. Each line unit includes a processor adapted to translate the incoming data flow communication for the respective line and a buffer for data packets. The type of switch used is not clear from this publication, neither is it exactly clear how connections for packet-switched data through the switch are connected and disconnected. On the other hand, what is at least partially clear is the work distribution between the central processors and the line unit processors in conjunction with the establishment of a new connection for packet-switched data through the switch and transmission of packet-switched data after the connection has been established.

A switching node for transmitting packet-switched data to and from a plurality of external lines is also known from the article "Axe for Packet Switching Integration" by Mats Norén and Carl-Gunnar Perntz. The switching node described in the article has a plurality of link handling modules with a link handling unit for each of the external links, an exchange, internal links for transmitting packet-switched data between the link handling modules and the exchange, regional processors and a central processor. The establishment of connections of packet-switched data through the exchange takes place with the aid of the central processor, subsequent to which packet-switched data are transmitted on established connections with the aid of the link handling units. It is not clear from the article how the exchange is designed and exactly how established connections through the exchange for the packet-switched data are connected and disconnected. On the other hand it is stated that the switch is based on "fast circuit switching" and that the link handling units connect the established connections for each packet transmitted.

It is well known to use buses for transmitting information, e.g. between different units in a computer. It is also known to use buses for transmitting information within telephone exchanges, e.g. between different computers for control and maintenance of a telephone exchange.

### DISCLOSURE OF INVENTION

In known methods and apparatus for transmitting information via a bus system and a plurality of transmission means for sending and receiving information on the bus system, most of the information transmission channels on the bus system are not generally reserved for transmission to or from some given one of the transmission means. At least most of the information transmission channels are generally usable for transmitting information from any one of a plurality of transmission means to any one of a plurality of transmission means. The different means have to compete for the information channels according to some given system, and the means can be given different priorities. Without doubt such known methods and apparatus can have certain advantages in certain respects in the transmission of information in certain connections. For example, the information channels available on the bus system can be utilised relatively effectively, particularly when a transmission means can send information on several of the information channels more or less simultaneously in time multiplex, and when each transmission means can receive information on several of the information channels more or less simultaneously in time multiplex. However, there is then required either a common special channel assigning means with channel assigning equipment for assigning to the means different information channels from time to time, or corresponding separate channel assigning equipment in several of the transmission means for finding different unoccupied information channels from time to time. Such common channel assigning means and equipment then tend to be relatively complicated and expensive, particularly with more sophisticated bus systems with effective utilisation of the information channels. In addition, the time tends to be relatively long for finding an unoccupied information transmission channel on the bus system and connecting a located information transmission channel, so that it is ready for transmission of information from a sending transmission means to a receiving means, at least in relation to the information transmission rate on the transmission channel. The relatively long time and the relatively complicated and expensive equipment required for finding and connecting an unoccupied information transmission channel in such cases can then be a problem in certain methods and apparatus for information transmission on certain bus systems. The invention aims at solving this problem particularly in switching nodes for transmitting packet-switched messages on packet-switched connections through the switching node.

One object of the present invention is to provide a method and apparatus for transmitting messages via a bus system with a plurality of information transmission channels and a plurality of transmission means for sending and receiving information on the bus system, and where the time required in this method and apparatus for connecting an unoccupied information transmission channel can be made short in relation to the transmission rate on the information transmission channel.

Another object of the present invention is to achieve a method and apparatus for transmitting messages via a bus system with a plurality of information transmission channels and a plurality of transmission means for sending and receiving information on the bus system, where connecting an unoccupied information transmission channel to the bus system between two transmission means in this method and apparatus can be carried out according to a relatively simple procedure and with relatively simple and cheap equipment.

A further object of the invention is to achieve a method and apparatus for transmitting message information via a bus system with a plurality of information transmission channels and a plurality of transmission means for sending and receiving information on the bus system, in this method and apparatus there not being required any particular channel assigning means with channel assigning equipment for assigning different information channels to different transmission means from one occasion to the next, the transmission means which is to send the information being able by itself to connect an unoccupied information transmission channel to a transmission means which is to receive information from the sending transmission means.

A still further object of the present invention is to achieve a method and a switching node for rapid transmission of packet-switched messages via a bus system with a plurality of information transmission channels and a plurality of transmission means for sending and receiving message information on the information transmission channels of the bus system.

Somewhat simple described, a method and apparatus in accordance with the invention is based on a given permanent assignment of the information transmission channels of the bus system to the different means, special status transmission channels being used for signaling whether the special data transmission channels are in an unoccupied or engaged state.

In a method in accordance with the invention, a plurality of data transmission channels on the bus system are permanently assigned, each to one of the transmission means and adapted for transmitting, in appropriate cases, message information solely to its assigned transmission means from a selectable one of the transmission means. Furthermore, a plurality of status transmission channels on the bus system are permanently assigned, each to one of the transmission means and corresponding data transmission channels. From a selectable one of the transmission means to other transmission means, each such permanently assigned status transmission channel is adapted for transmitting such status information as indicates whether the data transmission channel is engaged which is permanently assigned to the same transmission means as the respective status transmission channel. An apparatus in accordance with the invention includes a plurality of transmission means and a bus system with transmission channels arranged in a corresponding manner.

In a preferred embodiment of a method and apparatus in accordance with the invention, message information is transmitted from each transmission means on the bus system data transmission channels to at most one transmission means at a time.

In a further preferred embodiment of a method and apparatus in accordance with the invention, message information from at most one transmission means at a time are transmitted to each transmission means on the bus system data transmission channels.

In a preferred embodiment of a method and switching node in accordance with the present invention for transmitting information on packet-switched connections, each transmission means is supplied with the message information from at most one packet-switched connection at a time for sending on the bus system data transmission channels. It is here particularly preferred that each transmission means on the bus system data transmission channels receives the message information coming from at most one packet-switched connection at a time.

What is more fully and correctly expressed as distinguishing a method and an apparatus in accordance with the present invention as well as preferred embodiments thereof is disclosed in the independent and dependent claims.

A method and apparatus for transmitting message information in accordance with the invention and particularly according to preferred embodiments thereof provides several advantages, of which at least certain advantages with certain embodiments will be particularly salient in transferring message information on packet-switched connections.

An advantage is that the procedure for finding, in appropriate cases, an unoccupied information transmission channel for a given transmission will be simple. Another advantage is that the procedure, in appropriate cases, for finding and connecting up an unoccupied information channel for a given information transmission can be made relatively quickly in relation to the information transmission rate of the information channel. A further advantage is that common particular channel assignment means with channel assignment equipment for supervising and assigning information transmission channels to different transmission means from one time to another are not required. With its own simple and cheap equipment each transmission means can itself rapidly connect an unoccupied information transmission channel on the bus system in appropriate cases.

Certain special advantages can be achieved in a switching node for packet-switched communications with a preferred embodiment of a method and apparatus in accordance with the invention. A telephone exchange including bus system and transmission means for sending and receiving information does not need its own processor for controlling the individual connections and disconnections of the data transmission channels in conjunction with transmission of message information on packet-switched connections. The individual connections and disconnections can be made without a processor by the respective transmission means in the exchange in agreement with orders which are transmitted on the packet-switched connections. In this way a plurality of processors which are not associated with the exchange itself but are each connected to one of the transmission means via its own internal link can order connection of data transmission channels on the bus system from the transmission means they are connected to.

Further advantages with a method and apparatus in accordance with the invention and in particular with preferred embodiments should be understood by one skilled in the art after studying the following description of embodiments.

BRIEF DESCRIPTION OF DRAWINGS

Figure 1 illustrates, severely simplified, a first embodiment of an apparatus in accordance with the invention.
Figure 2 illustrates, severely simplified a switching node in accordance with the invention for packet-switched connections.
Figures 3a-3d illustrate the format of words transmitted in a switching node according to Figure 2.
Figure 4 illustrates part of an exchange in a switching node according to Figure 2.
Figures 5 and 6 illustrate the relative time relationship between different signals and processers in a switching node according to Figures 2-4.

BEST MODE FOR CARRYING OUT THE INVENTION

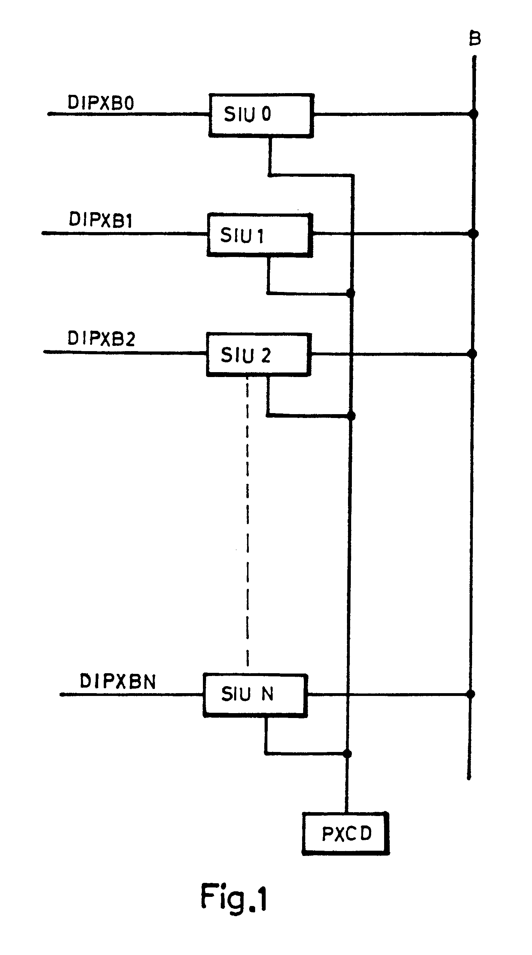

In Figure 1 there is a severely simplified illustration of a first embodiment of an apparatus in accordance with the invention for transmitting message information between a plurality of internal links DIPXB0, DIPXB1,....,DIPXBN. The apparatus includes a plurality of transmission means SIU0, SIU-1,...SIUN, a bus system B and a time control unit PXCD. All the transmission means are connected to the bus system and the time control unit, as well as being each connected to their respective one of the internal links.

The transmission means and bus system are formed such that on the bus system there are a plurality of data transmission channels, permanently assigned to its respective transmission means. Each such channel is adapted for solely transmitting message to the transmission means to which it is assigned. Message information can be transmitted on such a channel to the transmission means to which it is assigned from any one of the transmission means, although only from one of the transmission means at a time. Message information to a given transmission means is always transmitted on the bus system on the same data transmission channel, irrespective of from which transmission means the transmission takes place.

The transmission means and bus system are also formed such that there are a plurality of status transmission channels on the bus system, which are each permanently assigned to one of the transmission means. Each such channel is adapted for transmitting status information indicating whether the data transmission channel, which is permanently assigned to the same transmission means, is engaged or unoccupied for transmission of message information. Status information can be transmitted on each status transmission channel from any transmission means, although only from one means at a time. Status information can be transmitted on each such channel to any one of the transmission means and to several transmission means simultaneously. Status information indicating whether a given data transmission channel assigned to a given transmission means is engaged or unoccupied is thus always transmitted on the bus system on a given status transmission channel irrespective of from what transmission means and irrespective of to which transmission means of the status information is transmitted.

Transmission of message information on the data transmission channels between the transmission means is synchronised with bit and word synchronising signals from the time control unit PXCD. This unit also generates time allocation signals with which the transmission means are each allocated its unique time slot in a cyclic, time-related order. Solely during its own unique time slot can each transmission means begin or terminate sending status information indicating that a data transmission channel is engaged. On the other hand, each transmission means can continue a previously initiated transmission of status information during its allocated unique time slot as well as before and after such a time slot. Allocation of the unique time slots takes place independently of the transmission on the data transmission channels and in a time-related cyclic order. The time slots of a given transmission means are thus not dependent on whether the transmission means participates in any transmission as sending or receiving transmission means.

Each transmission means SIU is formed to transmit via the bus system message information from its internal link DIPXB to at most one transmission means at a time. Each transmission means is also formed for receiving via the bus system message information intended for its internal link from at most one transmission means at a time. Each transmission means is further formed for being able to receive on its assigned data transmission channel message information simultaneously as the means sends message information on any data transmission channel.

The bus system and transmission means are formed so that transmission of message information from a first transmission means to a second transmission means on a data transmission channel assigned to the second means does not obstruct transmission of message information from a transmission means other than the first one to a transmission means other than the second one on any data transmission channel assigned to transmission means other than the second one. With an apparatus according to Figure 1, which has N + 1 transmission means and N + 1 data transmission channels each assigned to its respective means and N + 1 status transmission channels each permanently assigned to its respective transmission means, up to N + 1 transmissions of message information between the internal links can therefore take place simultaneously without mutual obstruction. However, transmission of message information from each internal link can take place to at most one internal link at a time. Furthermore, transmission of message information to each internal link can take place from at most one internal link at at time.

Transmission of message information between two optional transmission links via an apparatus according to Figure 1 proceeds substantially as follows. A first transmission means connected to a first link receives via this link destination information denoting that message information is desired to be transmitted to a second link. The first transmission means senses the status information on the status transmission channel, which is permanently assigned to the transmission means of the second link. With the aid of the sensed status information, the first link's transmission means determines whether the data transmission channel which is permanently assigned to the second link's transmission means is engaged or unoccupied. If the data transmission channel which is permanently assigned to the second link's transmission means is engaged, the first link's transmission means postpones the desired transmission of message information. If the data transmission channel which is permanently assigned to the second link's transmission means is unoccupied during a time slot allocated to the first link's transmission means, the latter begins to send status information. This status information is sent on the status transmission channel which is permanently assigned to the second link's transmission means. This information indicates that the data transmission channel which permanently assigned the second link's transmission means is engaged. The desired transmission of message information from the first link then takes place via the first link's transmission means, via the data transmission channel on the bus system which is permanently assigned to the second link's transmission means, via the second link's transmission means and thus to the second link. During the whole of this desired transmission of message information, the first link's transmission means continues to send status information on the status transmission channel which is permanently assigned to the second link's transmission means. The status information indicates that the data transmission channel which is permanently assigned to the second link's transmission means is engaged. Remaining transmission means are thus prevented from beginning to send message information on the data transmission channel with is permanently assigned to the second link's transmission means. After the desired message information transmission from the first link to the second link has been performed, the first link's transmission means ceases to send the status information on the status transmission channel during the next subsequent time slot allocated to the first link's transmission means. By sensing the status information on the status information transmission channel of the second link's transmission means, the remaining transmission means can discover, as required, that the data transmission channel which is permanently assigned to the second link's transmission means has once again become unoccupied. One of the remaining transmission means can then during its allocated time slots begin to send, as required, status information on the status transmission channel of the second link's transmission means.

Each transmission means can individually find possibly unoccupied data transmission channels and utilise them, using the received destination information, the fixedly assigned data and status transmission channels on the bus system B, the allocation of time slots and synchronising from the time control unit PXCD and the method according to the above. There is thus not required in an apparatus according to Figure 1 and functioning in agreement with what has been described above, any intelligent channel allocation means common to the transmission means in order to allocate from case to case different unoccupied data transmission channels on the bus system to the transmission means. Transmission of message information through the apparatus illustrated in Figure 1 can thus be readily controlled simultaneously from a plurality of units, each connected to its respective one of the internal links, these units mutually independently being able to control at least the sensing of the status information on the status transmission channels. With separate status transmission channels in accordance with the above, sensing status information can take place particularly simply and quickly. In addition, the transmission means are able mutually indenpendently to at least sense the status information on any one of the status transmission channels and notify the unit connected to its internal link if a corresponding data transmission channel is engaged or unoccupied. Very short times can thus be obtained in the described apparatus according to Figure 1 for establishing a connection from one unit to another via an unoccupied data transmission channel on the bus system.

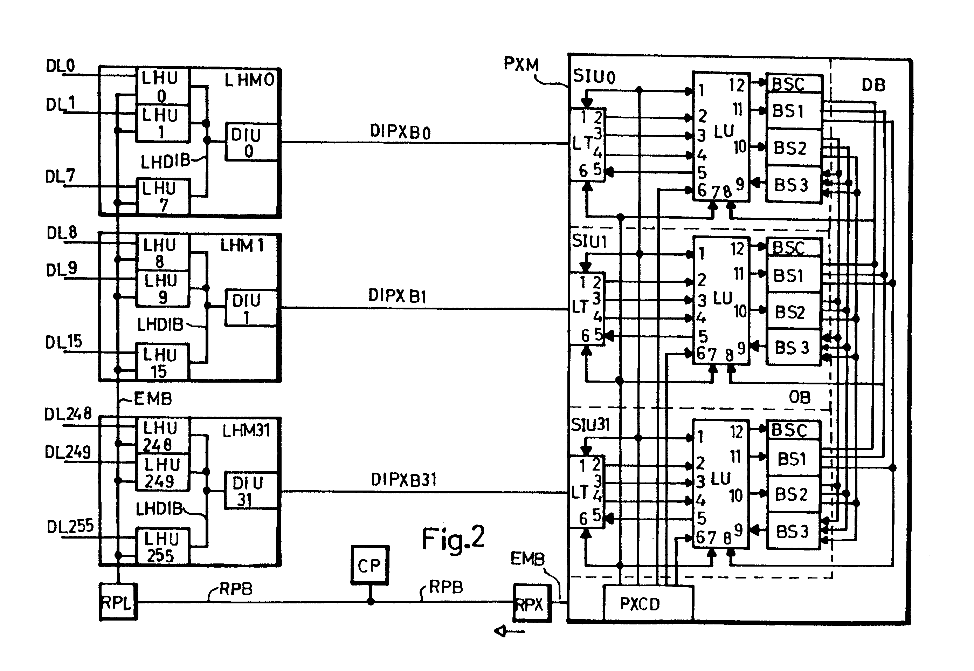

The apparatus according to Figure 1 and described above can be used together with different peripheral equipment for transmitting digital information in different connections. Figure 2 illustrates, heavily simplified, a switching node in accordance with the invention for transmitting packet-switched information between a plurality of external links DL. The switching node includes a plurality of internal links DIPXB and an exchange PXM, the latter functioning substantially as the apparatus according to Figure 1 for transmitting information between the internal links.

The exchange PXM includes a transmission means SIU for each internal link, a bus system with a data bus DB and a status bus OB, these buses each having a conductor for each transmission means, as well as a timing unit PXCD. The exchange is connected via a processor bus EMB to a regional processor RPX for supervision and maintenance. The regional processor RPX is in turn connected to the switching node central processor CP via a processor bus RPB.

Each transmission means includes a link connection unit LT, three bus selectors BS1-3 with common bus selector control BSC and a logic unit LU. Each transmission means is connected by its link connection unit to one of the internal links. Each link connection unit includes reception circuits for receiving information serially from the internal link. Each link connection unit has outputs 2, 3 and 4 coupled respectively to inputs 2, 3 and 4 of the logic unit in the same transmission means for transmitting bit clock pulses BCLX, word clock pulses WCLX and information SDLX from the internal link to the logic unit.

Each link connection unit also includes transmission circuits for transmitting information from the transmission means serially on the internal link. Each link connection unit has an input 5 connected to an output 5 on the logic unit in the same transmission means for receiving information SDXL which is to be sent out on the internal link. Transmission of this information takes place at a rate determined by the timing unit. Each link connection unit has therefore an input 1 for bit clock pulses BCXL and an input 6 for word clock pulses WCXL connected to corresponding outputs of the timing unit PXCD.

The logic unit LU of each transmission means has, like the link connection unit, an input 1 for bit clock pulses BCXL and an input 7 for word clock pulses WCXL connected to outputs on the timing unit. In addition, the logic unit has an input 6 connected to its own output on the timing unit for unique time allocation signals PN. The logic unit further has an input 8 connected to an unique conductor in the data bus DB, this conductor being permanently assigned to its respective transmission means. The inputs 8 of different logic units are thus connected to different conductors in the data bus.

The logic unit has an input 9 connected to an output on the third bus selector BS3, an output 10 connected to an input on the second bus selector BS2, an output 11 connected to an input on the first bus selector BS1 and an output 12 connected to an input on the bus selector control BSC.

The first bus selector BS1 is connected to all conductors in the data bus DB and formed for sending status information from the logic unit output 11 to a conductor in the bus determining by the bus selector control BSC.

The second bus selector BS2 is connected to all the conductors in the status bus OB and formed for sending status information from the logic unit output 10 to a conductor in the status bus determined by the bus selector control BSC.

The third bus selector BS3 is connected to all to the bus wires in the status bus OB and is formed for expediting status information to the logic unit input 9 from a conductor in the status bus determined by the bus selector control.

The bus selector control of each transmission means is adapted to control all three bus selectors in the same transmission means synchronously in response to information from the logic unit output 12. When the first bus selector is set for expediting information to a first of the conductors in the data bus DB, both the second and the third bus selectors are therefore set to enable sending or receiving status information on a first of the conductors in the status bus. When the first bus selector is set to a second of the conductors in the data bus, both the second and the third bus selectors are set on a second of the conductors in the status bus. The corresponding applies when the first bus selector is set to any other conductor in the data bus.

In the exchange, each transmission means is adapted for individually in co-action with remaining means, transferring information on the bus system substantially in agreement with what has been described in connection with Figure 1.

The message information which is to be transmitted on the exchange bus system comes into the switching node on one or more of a plurality of external links DL0, DL1,....,DL255. After transmission within the switching node, the message information is to be expedited from the node on one or more of the external links DL. On the latter, transmission of the packet-switched message information towards and away from the switching node takes place according to the protocol X75.

The switching node in Figure 2 includes a plurality of link handling units LUH0, LHU1,....LHU255, each connected to its respective external link DL0, DL1,....DL255. Each link handling unit includes transmitter, receiver, store, main processor, slave processor and other devices for receiving, storing and sending packet-switched message information, thus to handle the levels 1, 2 and 3 in the protocol X75.

All link handling units are connected via a processor bus EMB to a regional processor RPL. The latter is also connected to the switching node central processor CP via a processor bus RPB.

The link handling unit LHU are put together in groups into link handling magazines LHM. In each such magazine the units LHU are connected to a distribution unit DIU via a distribution bus LHDIB. Via its internal link DIPXB each distribution unit is also connected to its respective transmission means SIU in the exchange PXM in the switching node. The number of transmission means SIU in the exchange therefore agrees in Figure 1 with the number of internal links DIPXB and the number of link handling magazines LHM. However, it is preferable that the transmission means SIU, the internal links and the distribution units DIU are duplicated and conventionally arranged in two planes for reasons of operational reliability.

The switching node in Figure 2 is of a type intended for at most 256 external X75 links and has eight link handling units LHU per link handling magazine LHM. The number of internal links DIPXB and the number of transmission means SIU in one plane is thus a maximum of 32. For reasons of space, only one plane of the switching node is illustrated in Figure 2 and with having only three of the link handling magazines, namely LHM0, LHM1 and LHM31, each only three of the link handling units. For the same reasons, only three of the internal links are illustrated namely DIPXB0, DIPXB1 and DIPXB31 and only three of the transmission means in the exchange, namely SIU0, SIU1 and SIU31.

Each link handling unit is formed for the expedition of packet-switched information solely to one link handling unit at a time. Each such unit is also formed for receiving packet-switched information from solely one link handling unit at a time. Accordingly, each link handling unit can expedite packet-switched information to a link handling unit simultaneously with the reception of packet-switched information from the same or some other link handling unit.

Each internal link DIPXB connected to a link handling magazine LHM is formed for transmitting packet-switched information to its transmission means SIU from solely one link handling unit in the magazine at a time. Each distribution unit DIU between an internal link and a group of link handling units in a magazine is therefore adapted to allow solely one link handling unit LHU at a time to send information to the respective means SIU in the exchange. Each internal link DIPXB is also formed for transmitting packet-switched information from its transmission means SIU in the exchange to solely one link handling unit at a time in its magazine. Packet-switched information can take place simultaneously in both directions on each internal link DIPXB, i.e. transmission of packet-switched information from a link unit in the link magazine LHM can take place simultaneously with transmission of packet-switched information to a link handling unit in the same link's magazine LHM. The transmission rate on an internal link is high, e.g. 8 Mb/s, compared with the transmission rate on an external link, e.g. 64 Kb/s.

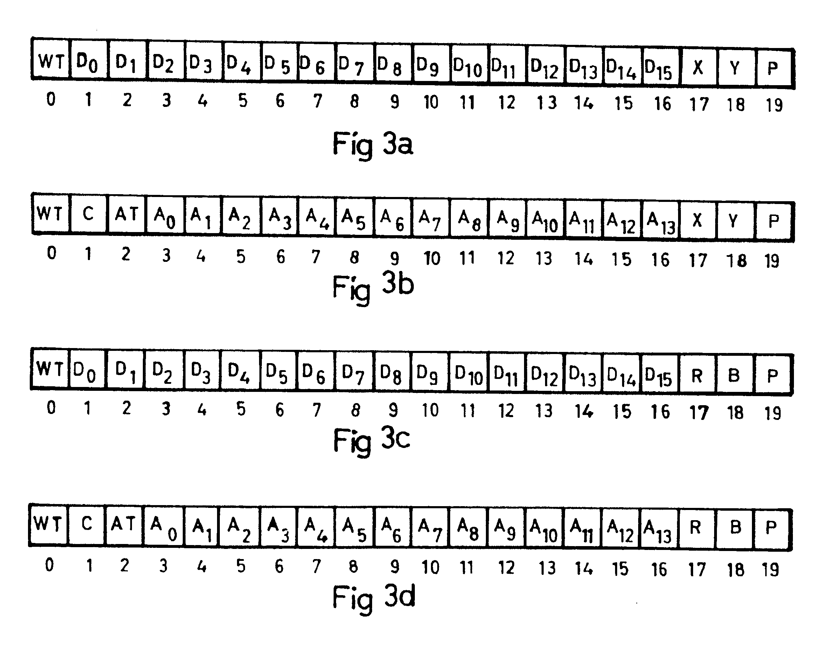

Different kinds of words with formats according to Figures 3a-3b are constantly transmitted on each internal link DPXB between a transmission means and a group of link handling units in a magazine LHM. Data words according to Figure 3a or control words according to Figure 3b can be transmitted on an internal link DIPXB in a direction from a group of link handling units to a transmission means SIU in the exchange. Data words according to Figure 3c or control words according to Figure 3d can be transmitted on an internal link in a direction from a transmission means SIU in the exchange to a group of link handling units.

All the words according to Figures 3a-3d include 20 bits numbered 0 to 19. The symbols in one word are transmitted on the respective internal link in series and in order with bit 0 first and bit 19 last in the respective words. In all words the bit 0 is a word type bit, WT, which is used for denoting whether the word is a data word or a control word. The word type bit is set to 0 for data words and 1 for control words by the respective link handling unit and its transmission means.

Bit 1 up to and including bit 16 are data bits D0, D1,.....,D15, in data words according to Figure 3a going from from a link handling unit to a transmission means in the exchange, and these data bits can be utilised for transmitting packet-switched message information through the exchange. If there is no message information needing to be transmitted, the respective distribution unit sends data words with D0-D15 set to 0. Bits 17 and 18 in data words transmitted on an internal link to a transmission means in the exchange are filling-out bits, X and Y, which are not utilized for transmission of information and have their logic value set to 0 by the link handling unit and distribution unit when no message information shall be sent. Bit 19 is a parity bit P, the logic value on transmission is set by the link handling unit or the distribution unit so that the sum of the logic values of all bits in the data word will be odd.

Bit 1 is a switching bit C, in control words according to Figure 3b, from a link handling unit to a transmission means in the exchange, the logic value of the switching bit denoting whether the transmitting link handling unit desires to have a communication set up or disconnected. When a setting up is desired, the link handling unit sets the value of the switching bit C to 1. When disconnection is desired the link handling unit sets the value of the switching bit C to 0. Bit 2 is an address type bit AT, and bit 3 up to and including 16 are address bits, A0, A1,...A13. The logic value of the address type bit denotes what type of address is related to by the address bits A0, A1,...A13. When these address bits relate to an address to a link handling magazine LHM, the address type bit AT is set to 0. When they relate to an address of a link handling unit in a given magazine LHM the address type bit value is set to 1. Bit 19 is a parity bit which has its value set so that the control word is given odd parity.

Bit 1 up to and including bit 16 are data bits D0, D1,....D15, in data words according to Figure 3c, going from a transmission means SIU in the exchange to a magazine with link handling units, and these data bits can be utilised for transmitting packet-switched message information. When there is no message information to be transmitted, the transmission means sends data words with D0-D15 set to 0. Bits 17 and 18 are used for information to a link handling unit which has requested establishing a connection as whether or not the requested connection has been able to be set up. Bit 17 is thus a "fullfilled" flagging bit R, the logic value of which is set by the transmission means to 1 when the requested connection has been connected. After connection, the transmission means sets the "fulfilled" flagging bit to 1. Bit 18 is an "engaged" flagging bit B, the logic value of which is set by the transmission means to 1 if requested connection cannot be set up due to an engaged situation. Bit 19 in data words according to Figure 3c is a parity bit P, the logic value of which is set by the transmission means SIU in the exchange so that the data word sent out by the respective internal link is given odd parity.

Bit 1 is a switching bit C in control words according to Figure 3d which are transmitted on an internal link from a transmission means SIU to a group of link handling units, the logic value of this switching bit denotes whether setting up or disconnection is desired. When establishment of a connection is desired, the value of the switching bit C is set to 1. When disconnection is desired the value of the bit is set to 0. Bit 2 is an address type bit AT, and bit 3 up to and including 16 are address bits A0, A1,....A13. The logic value of the address type bit denotes what type of address the address bits A0, A1,....A13 relate to. When the address bits A0-A13 relate to an address to a magazine with a group of link handling units LHU the address type bit AT is set to 0. When the address bits A0-A13 relate to an address to a link handling unit in a magazine, the bit value is set to 1. Bits 17 and 18 are used in control words from a transmission means in the exchange in the same way as bits 17 and 18 are used in data words from a transmissin means. As with remaining words, bit 19 in control words according to Figure 2d is a parity bit, the logic value of which is set so that the word is given odd parity.

The function of the switching node would be most simply explained by describing examples of happenings in conjunction with transmission of packet-switched information between external links and through the exchange. In the following it is therefore assumed that information concerning a packet-switched communication comes in on an external link handling unit LHU, hereinafter this unit being designated "incoming LHU", and by way of example it can be LHU1 connected to the external link DL1. For the sake of simplicity, information coming in on the link DL1 to the incoming LHU is assumed to be divided up into a setting up packet, a plurality of information packets and a disconnection packet.

When a switching packet comes on the link DL1 to the incoming LHU, the latter expedites the information in this packet to the switching node central processor CP via the regional processor RPL and processor bus EMB. The information from the switching packet is analysed by the central processor, which decides which link handling unit the subsequent information packets are to be sent from the incoming LHU. The link handling unit LHU to which the information packet is to be expedited is hereinafter designated "outgoing LHU" and can be LHU 248, for example. After analysis and decision, the processor transmits destination information to the incoming LHU via the processor bus and regional processor RPL. This destination information indicates what link handling unit is to be outgoing LHU. The central processor also sends information via the regional processor RPL and the processor bus to the outgoing LHU as to whether it can expect information from the incoming LHU. Accordingly, a virtual connection for packet-switched information through the switching node has been established with the aid of the central processor. The situation after this establishment is thus that the incoming LHU and outgoing LHU have information as to whether a logic communication exists between incoming external link DL1 connected to the incoming LHU and an outgoing external link DL 248 connected to the outgoing LHU. No physical connection for transmission of the subsequent information packets through the exchange PXM is as yet established, however. Setting up an established virtual connection through the exchange is performed on the initiative of the incoming LHU.

When the incoming LHU has received one or more information packets which are to be expedited to the outgoing LHU, the incoming LHU forms a control word with the destination information indicating the magazine LHM in which the outgoing LHU is to be found. The incoming LHU subsequently sends a request via the distribution bus LHDIB to the distribution unit DIU0 for acess to the internal link DIPXB0. When the incoming LHU is given an opportunity by the respective distribution unit DIU to send information via the internal link DIPXB0 the incoming LHU sends this control word to its transmission means SIU0 in the exchange. The control word is received by the link connection unit LT of the transmission means and is expedited to the logic unit LU of the transmission means. Providing that the control word and previous word have the right parity, information from the control word is expedited from the logic unit to the bus selector control BSC, causing this to be set to the transmission means in the exchange to which the outgoing LHU is connected via an internal link.

The bus selector control setting on the transmission means in the exchange to which the outgoing LHU is associated causes the first and second bus selectors to be set for sending on the conductors of the data bus and the status bus which are permanently assigned to the transmission means of the outgoing LHU. The third bus selector will simultaneously be set for receiving status information on the status bus conductor which is permanently assigned to the transmission means SIU31 of the outgoing LHU.

The logic unit LU in the transmission means SIU0 is formed so that neither the first nor the second bus selector is immediately supplied with any signal which will cause them to begin sending immediately. The logic unit is formed such as to first receive any status information via the third bus selector, this information possibly being transmitted from some other means SIU on the status bus conductor associated with the transmission means SIU31 to which the outgoing LHU is connected. If the logic unit receives via the third bus selector such status information indicating that the transmission means of the outgoing LHU is engaged, this signifies that the established virtual communication between the incoming LHU and outgoing LHU cannot be set up for the moment. In such a case the logic unit notifies this to the incoming LHU by setting the "fullfilled" flagging bit R to 0 and the engaged flagging bit to 1 in words from the transmission means to the incoming LHU.

The established virtual connection can be set up if the logic unit does not receive any status information via the third bus selector, indicating that the transmission means of the outgoing LHU is engaged. In which case the logic unit supplies signals to the second bus selector BS2 so that status information is sent from this selector indicating that the transmission means SIU31 of the outgoing LHU is engaged. The logic unit also sends information via the internal link DIPXB0 to the incoming LHU that the connection is set up. The "fullfilled" flagging bit R is then set to 1 and the "engaged" flagging bit is set to 0 in words from the means SIU0 to the incoming LHU. By this action the data bus conductor to the transmission means of the outgoing LHU has been reserved for the established connection between the incoming LHU and outgoing LHU. If some other transmission means SIU requires to transmit to the transmission means of the outgoing LHU, this will be prevented by the status information sent from the transmission means SIU0 of the incoming LHU on the status bus conductor associated with the transmission means SIU31 of the outgoing LHU.

When the incoming LHU has obtained information from its means that the communication through the exchange to the outgoing LHU has been connected up, the incoming LHU will transmit control words and data words via its internal link DIPXB0 to its transmission means SIU0. These control and data words will be expedited from the link connection unit LT of the transmission means SIU0 via the logic unit LU to the first bus selector BS1 in the same transmission means. Words from the first bus selector will be transmitted via a conductor in the data bus to the logic unit in the transmission means SIU31, to which the outgoing LHU is connected. The words are expedited from this logic unit via the link connection unit LT and internal link DIPXB31 of the transmission means SIU31 to the distribution unit DIU31 for the magazine LHM31 with link handling units with which the outgoing LHU is associated. These words are transmitted from the distribution unit DIU 31 on the distribution bus LHDIB to all the link handling units LHU in the group. At least one control word is provided with destination information, however, saying which link handling unit in the magazine the subsequent data words are intended for. They will therefore be ignored by all LHUs in the magazine except the outgoing LHU, and message information from the data words are stored solely in the outgoing LHU store. For the sake of clarity, it is pointed out that no buffer storage proper of these data words needs to take place in the distribution units DIU0 or DIU31, in the internal links DIPXB0 or DIPXB31 or in the bus selectors. In principle, transmission can thus take place directly from the incoming LHU to the outgoing LHU. When all data words have been transmitted, the incoming LHU sends at least one control word with the disconnection request to its transmission means SIU0, after which the logic unit in SIU0 ceases to supply the second bus selector signals such as cause the engaged information to be sent on the engaged bus wire associated with the transmission means of the outgoing LHU. This transmission means SIU31 thus ceases to be engaged. Other transmission means in the exchange PXM can then discover that the status information flagging engaged is no longer sent from the engaged bus conductor in question, and can as required, by beginning itself to send engagement flagging status information on this bus conductor in the "engaged" bus reserve the corresponding bus conductor in the data bus for transmission to the transmission means SIU31 in question at the exchange.

In order to prevent that one or some transmission means are continuously, or for longer periods, unable to expedite packet-switched information to a given transmission means due to their data conductors being engaged, the logic units LU of the transmission means are controlled such that each logic unit begin or terminate transmitting "engaged" flagging status information solely during a given time slot. The logic units are each allocated equally as great time slots by the time allocation signals from PXCD, so that during a first time slot solely a first transmission means can begin or terminate transmitting status information flagging "engaged", during a second time slot solely a second transmission means can begin or terminate sending status information flagging "engaged", and so on. On the other hand, transmission means which during its time slot has begun to send status information on a given conductor in the "engaged" bus can, of course, continue to send the same status information on the same conductor in the status bus even after the termination of its time slot.

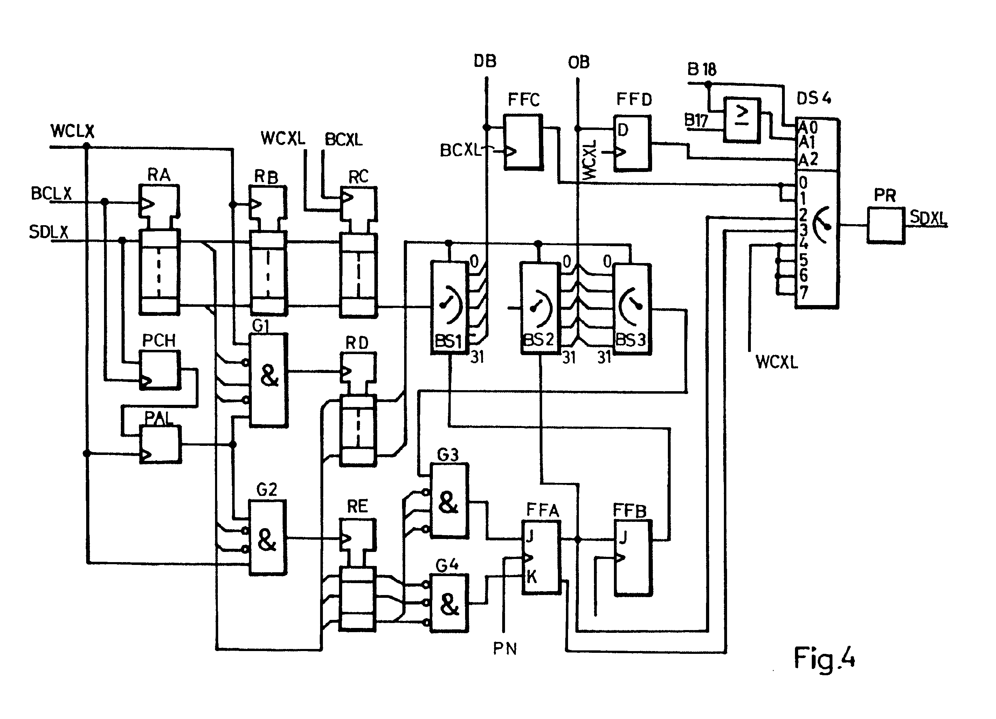

In Figure 4 there is a simplified block diagram of an embodiment of parts of a transmission means SIUN, and its connection to the data bus DB, "engaged" bus OB and time control unit PXCD in an exchange.

The transmission means SIUN receives via its link connection unit (not illustrated in Figure 4 word clock signals WCLX, bit clock signals BCLX and binary information signals SDXL in serial form from its internal link DIPXBN. Depending on the implementation of the internal link, these word and bit clock signals can have a phase angle differing more or less from the phase angle of the corresponding word clock signals WCXL or the bit clock signals BCXL received by the transmission means from the time control unit PXCD in the exchange. The transmission means therefore has three registers RA, RB and RC for locking words received from a link handling unit via the internal link DIPXBN to the phase of the time control unit clock signals.

Each of the registers RA, RB and RC has 20 storage positions for binary symbols. The binary information symbols from the internal link are fed in serially into the first register at a rate determined by the the bit clock signal BCLX from the link. The shift register RA has an output for every storage position and these outputs are each connected to their corresponding inputs on the second register RB. The binary information in the first register is fed in parallel and word by word into the second register at a rate determined by the word clock signals WCLX from the link. The second register RB also has an output for each of its storage positions, and these outputs are each connected to its respective input on the third register RC. The binary information in the second register is fed in parallel and word by word into the third register RC at a rate determined by word clock signals WCXL from the time control unit PXCD. The third register RC has an output connected to an input on a first bus selector BS1 is formed and connected for serially feeding binary information to the first bus selector at a rate timing determined by bit clock signals BCXL from the time control unit.

The transmission means in Figure 4 includes a parity control means PCH and a parity alarm means PAL for the information symbols SDLX from the internal link. The binary information symbols from the link are fed into the parity controls means PCH at a rate determined by the bit clock signals BCLX from the link. The parity control means PCH has an output connected to an input of the parity alarm means PAL for the information symbols. The parity alarm means also has a clock input for receiving word clock signals WCLX from the link. The parity alarm means PAL has an output connected to an input on a first AND gate G1 and an input on a second AND gate G2 for transmitting a signal denoting whether the binary information symbols in the latest received word from the internal link have the right parity.

The first AND gate G1 furthermore has an input for word clock signals WCLX from the link and three inputs for binary information signals from the first register RA. Two of these inputs are inverting and connected to the output from the memory positions in the first register which contain a bit number 0 and a bit number 2 when a complete word is fed into the first register. The third input is not inverting and is connected to the output from the memory position in the first register which contains bit number 1 when a complete word is fed into the first register. The first AND gate G1 has an output connected to a clock input on a fourth register RD.

The second AND gate G2 also has an input for word clock signals WCLX from the link and two inverting inputs for information symbols from the first register. The inverting inputs are connected to the outputs from the store positions in the first register which contain bit number 0 and bit number 2 when a complete word is fed into the first register. The second AND gate G2 has an output connected to a clock input on a fifth register RE.

The fourth register RD has five storage positions, each with an input and an output for binary symbols. The inputs are each connected to its individual outputs from the storage positions in the first register RA containing bit number 3, 4, 5, 6 or 7 when a complete word is fed into the first register. The outputs of the fourth register are connected to control inputs on each of a first bus selector BS1, a second bus selector BS2 and a third bus sele tor BS3. The fourth register is thus connected to the first register for parallel feeding in of five binary symbols from the same word at a rate determined by the output signals from the first AND gate G1. The fourth register is also connected for synchronous control of the three bus selectors.

The fifth register RE has three storage positions, each with an input and an output for binary symbols. The inputs of the fifth register are each connected to its individual output from the storage positions in the first register RA containing bit number 0, bit number 1 and bit number 2 when a complete word is fed into the first register. The outputs from the fourth register storage positions are each connected to its individual input on a third AND gate G3 and also to its individual input on a fourth AND gate G4. All the inputs on the fourth AND gate are inverting, but only two of the third AND gate inputs are inverting. The inputs of the third AND gate are connected to the outputs of the fourth register such that an input which is not inverting on the third AND gate receives via the fourth register binary signals representing bit number 1 in words from the internal link. In addition, the third AND gate has a further input which is not inverting and is connected to the output of the third bus selector.

The third AND gate G3 has an output connected to one input of a bistable first multivibrator FFA and the fourth AND gate has an output connected to the second input of this multivibrator, which further has a clock input connected to the time control unit PXCD for receiving a time allocation signal PN to the transmission means SIUN. The multivibrator FFA has two complementary outputs and is arranged such that binary signals are generated at these outputs, with their value depending on the output signals from the first and fourth AND gates, and this value can only be altered at times determined by the time allocation signal PN.

One output of the bistable multivibrator FFA is connected to an energising input on the second selector BS2, and also to an input on a second multivibrator FFB. The second latter also has a clock input connected to an output for bit 19 on the time control unit. The output of this multivibrator is connected to an energising input on the first bus selector BS1.

A third multivibrator FFC has an input connected to the conductor in the data bus DB which is permanently assigned to the transmission means. This multivibrator FFC also has a clock input connected for receiving bit clock pulses BCXL from the time control unit, and has its output connected to two data inputs denoted 0 and 1 on a first data selector DS4.

A fourth multivibrator FFD has an input connected to the conductor in the status bus OB, which is permanently assigned to the transmission means. In addition, this multivibrator has a clock input connected for receiving word clock pulses WCXL from the time control unit, and its output connected to a control input denoted A2 on the first data selector DS4.

The first data selector DS4 has a control input A0 connected for reception of a signal B18 and a control unit A1 connected to the output of a first OR gate.

This OR gate has in turn two inputs connected for receiving the signal B18 and a signal B17, respectively. The first data selector DS4 further has two data inputs denoted 2 and 3, each connected to complementary outputs on the first multivibrator, these outputs giving information on engaged/unoccupied. In addition, the first data selector has four further data inputs denoted 4, 5, 6 and 7 connected for receiving word clock signals WCXL from the time control unit PXCD, and an output connected to an input of a parity regeneration means PR. This means has in turn an output connected to an input 5 of the link connection unit LT of the transmission means.

The first data selector is formed for sending a binary signal on its output with a value agreeing with the value of a signal on one of its data input 0-7, the appropriate input being given by signals on the control inputs A0, A1, A2 of the selector. As output signal the selector selects the input signal on the data input, the denotation of which agrees with the binary value of the signals on the control inputs A0-A2. For example, if the input signals on the control inputs A0 and A1 have the logic value 0 and the input signal on the control input A2 has the logic value 1, the selector selects as its output signal the input signal on the data input denoted 4. If instead the input signal on the control input A0 has the logic value 1 and the input signals on the control inputs A1 and A2 have the logic value 0, the selector selects as its output signal the input signal on the data input denoted 1.

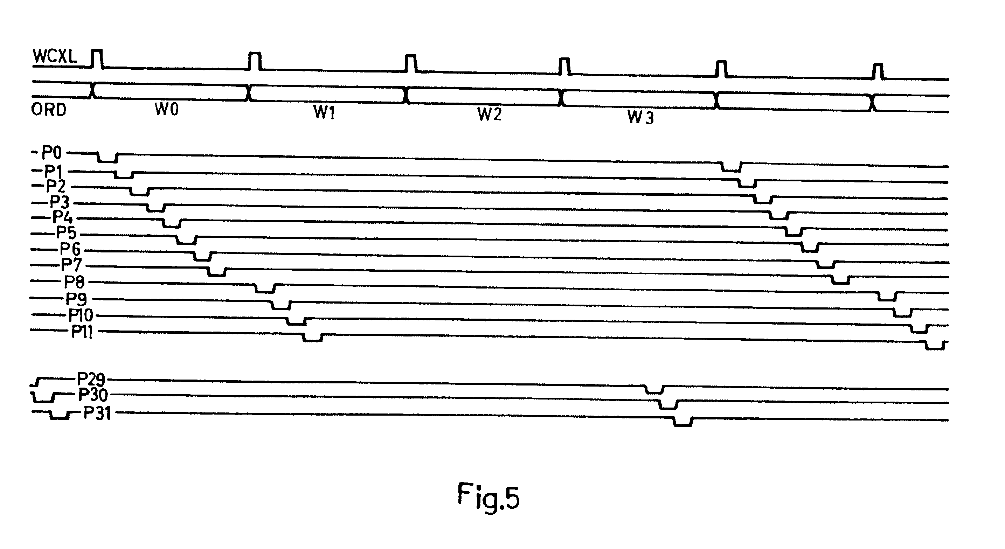

Timing relationsships between the word synchronising pulses WCXL and the different time allocation signals P0, P1,....P31 from the time control unit PXCD to the different transmission means are illustrated in Figure 5. From the Figure will be seen, inter alia, that the time allocation signals P0-P31 occur in a cyclic order and that one cycle is just as long as four 20 bit words on an internal link. Of the time allocation signals in a cycle, P0-P7 occur during a first word W0, P8-P15 during a second word W1, P16-P23 during a third word W2 and P24-P31 during a fourth word W3. The signals P0, P8, P16 and P24 occur after the nearest word synchronising pulse, while the signals P7, P15 and P31 occur before the nearest word synchronising pulse.

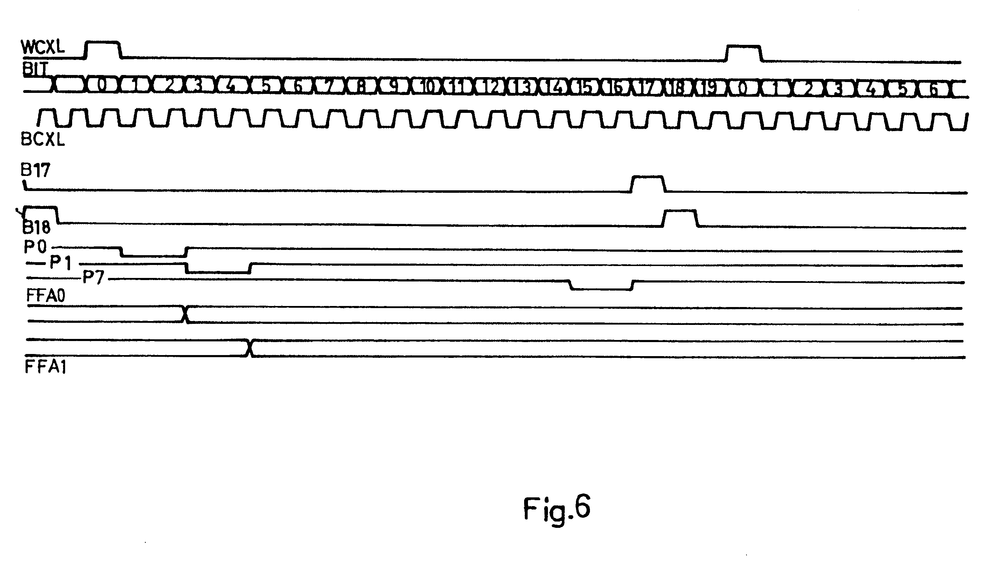

In Figure 6 there is illustrated the timing relationship between the word synchronising pulses WCXL, the bit synchronising phases BCXL and the time allocation signals P0 and P1 and P7 from the time control unit PXCD as well as the bits 0-19 in a word and the signals from the multivibrators FFA in the transmission means SIU0 and SIU1. From Figure 6 it is apparent, inter alia, that the word synchronising pulses WCXL occur during bit 0 in each word, that the time allocation signal P0 occurs during the bits 1 and 2, and the time allocation signal P1 occurs during the bits 3 and 4, as well as that the time allocation signal P7 occurs during the bits 15 and 16 in the same word. In addition, it will be seen from the Figure that the complementary outputs from the first multivibrators FFA0 and FFA1 in the transmission means SIU0 and SIU1 may change logic level at the juncture between bit 2 and bit 3 and at the junction between bit 4 and bit 5, i.e. at the end of the time allocation of the respective signal P0 or P1 of the respective transmission means.

The transmission means according to Figures 4-6 functions in principle in the same way as previously described in connection with Figures 1-3. It should therefore not be necessary to further describe the function of the individual devices in the transmission means.

In the embodiment described above, a plurality of channels in the bus system have been created with the aid of a plurality of conductors. Furthermore, a plurality of data transmission channels on the bus system have each been permanently assigned to a transmission means by a data bus having an unique conductor for each transmission means. Status transmission channels separate from the data transmission channels have been created in the embodiment described here by a separate status bus with a conductor for each transmission means. It should be obvious to one skilled in the art, however, that this can be achieved in other ways. For example, a bus system with a bus common to all channels instead of one with two separate buses could be used to create both a plurality of data transmission channels and a plurality of status transmission channels. It is also conceivable, but not to be preferred, to bring down the number of required conductors in the bus system with the aid of some kind of multiplexing process while the permanent assignation of data and status transmission channels is maintained.

## Claims

1. A method of transmitting message information between a plurality of transmission means (SIU) by means of a bus system (B) having a plurality of transmission channels, characterized in

dividing the transmission channels into data transmission channels and status transmission channels ;

assigning each data transmission channel and each status transmission channel to a respective transmission means ;

transmitting message information from a first transmission means to a second transmission means only over the data transmission channel assigned to said second transmission means ; and

transmitting status information from said first transmission means to all other transmission means over the status transmission channel assigned to said second transmission means to indicate that the data transmission channel assigned to said second transmission means is occupied.

2. The method as claimed in claim 1, wherein message information is transmitted on the data transmission channels from each transmission means to at most one other transmission means at a time.

3. The method as claimed in claim 1, wherein message information is transmitted on the data transmission channels to each transmission means from at most one transmission means at a time.

4. The method as claimed in claim 1, further including the steps of sensing status information on the status transmission channel assigned to a receiving transmission means prior to a desired transmission of message information from a transmitting means to a receiving transmission means, to determine whether the data transmission channel of the receiving transmission means is unoccupied or engaged as a result of the transmission from some other transmission means, and inhibiting a desired transmission of message information from the transmitting transmission means to the receiving transmission means as long as the sensed status information on the status transmission channel of the receiving transmission means indicates that the data transmission channel to the receiving transmission means is engaged as a result of the transmission from another transmission means.

5. The method as claimed in claim 1 for transmitting message information on packet-switched connections, wherein each transmission means for transmitting information on the bus system is supplied message information from at most one packet-switched connection at a time, and each transmission means for receiving information on the bus system receives on its data transmission channel message information from at most one packet-switched connection at at time.

6. Apparatus for transmitting information, comprising

a plurality of transmission means (SIU) for transmitting and receiving information and a bus system (B), characterized by

the bus system having a plurality of data transmission channels each assigned to a respective one of the transmission means, each data transmission channel adapted for transmitting message information only to the transmission means to which it is assigned from a selectable one of the transmission means ; and

a plurality of status transmission channels on the bus system which are each assigned to a respective one of the transmission means adapted for transmitting status information from a selectable one of the transmission means to all other transmission means to indicate whether the data transmission channel assigned to the same transmission means as the status transmission channel is engaged or unoccupied for transmitting message information.

7. The apparatus as claimed in claim 6, wherein each transmission means transmits message information on the data transmission channels to at most one other transmission means at a time.

8. The apparatus as claimed in claim 6, wherein each transmission means receives message information on the data transmission channels from at most one other means at a time.

9. The apparatus as claimed in claim 6, wherein the data transmission channels are arranged on different conductors on a data bus (DB), said bus including a unique conductor for each transmission means and the status transmission channels are arranged on different conductors in a status bus (OB), said status bus including a unique conductor for each transmission means.

10. The apparatus as claimed in claim 6 for transmitting packet-switched message information on packet-switched connections, further including a plurality of link handling units (LHU) each connected to a respective external link (DL0...DL255), said units being connected in groups via one of a plurality of distribution buses (LHDIB) to one of a plurality of distribution units (DIU) which are each connected via a respective internal link (DIPXB0...DIPXB31) to a respective transmission means (SIU) for transmitting and receiving information on at least one bus, said transmission means each including a link connection unit (LT), a logic unit (LU), a first bus selector (BS1), a second bus selector (BS2), a third bus selector (BS3) and a bus selector control (BSC), said first bus selector being connected to a plurality of conductors in a data bus (DB), said second and third bus selectors being connected to a plurality of conductors in a status bus (OB), said logic unit being connected to a conductor in the data bus which is assigned to a respective transmission means and unique to said transmission means, and a time control unit (PXCD) common to the transmission means for generating bit and word synchronizing signals for the transmission means and the internal links, and time allocation signals for the logic units of the transmission means.

## Ansprüche

1. Verfahren zur Übertragung von Nachrichtendaten zwischen einer Anzahl von Übertragungseinrichtungen (SIU) mittels eines Bussystems (B), das eine Anzahl Übertragungskanäle hat, **gekennzeichnet** durch

Aufteilung der Übertragungskanäle in Datenübertragungskanäle und Statusübertragungskanäle ;

Zuweisung eines jeden Datenübertragungskanals und eines jeden Statusübertragungskanals an eine jeweilige Übertragungseinrichtung ;

Übertragung von Nachrichtendaten aus einer ersten Übertragungseinrichtung an eine zweite Übertragungseinrichtung nur über den Datenübertragungskanal, der der zweiten Übertragungseinrichtung zugewiesen ist ; und

Übertragung von Statusdaten aus der ersten Übertragungseinrichtung an alle anderen Übertragungseinrichtungen über den der zweiten Übertragungseinrichtung zugewiesenen Statusübertragungskanal, um anzugeben, dass der der zweiten Übertragungseinrichtung zugewiesene Datenübertragungskanal besetzt ist.

2. Verfahren nach Anspruch 1, dadurch **gekennzeichnet**, dass Nachrichtendaten auf den Datenübertragungskanälen von jeder Übertragungseinrichtung auf höchstens eine andere Übertragungseinrichtung auf einmal übertragen werden.

3. Verfahren nach Anspruch 1, dadurch **gekennzeichnet**, dass Nachrichtendaten auf den Datenübertragungskanälen an jede Übertragungseinrichtung von höchstens einer Übertragungseinrichtung auf einmal übertragen werden.

4. Verfahren nach Anspruch 1, ferner **gekennzeichnet** durch Abfragen von Statusdaten auf einem einer empfangenden Übertragungseinrichtung zugewiesenen Statusübertragungskanal vor einer gewünschten Übertragung von Nachrichtendaten von einer Übertragungseinrichtung zu einer empfangenden Übertragungseinrichtung zwecks Bestimmung, ob der Datenübertragungskanal der empfangenden Übertragungseinrichtung wegen der Übertragung von irgendeiner anderen Übertragungseinrichtung frei oder besetzt ist, und Verhindern einer gewünschten Übertragung von Nachrichtendaten von der sendenden Übertragungseinrichtung zur empfangenden Übertragungseinrichtung, solange die abgefragten Statusdaten auf dem Statusübertragungskanal der empfangenden Übertragungseinrichtung angeben, dass der Datenübertragungskanal zur empfangenden Übertragungseinrichtung wegen der Übertragung aus einer anderen Übertragungseinrichtung belegt ist.

5. Verfahren nach Anspruch 1 zur Übertragung von Nachrichtendaten auf paketweisen Verbindungen, dadurch **gekennzeichnet**, dass jede Übertragungseinrichtung zur Datenübertragung auf dem Bussystem ·mit Nachrichtendaten aus höchstens einer paketweisen Verbindung auf einmal erhält, und jede Übertragungseinrichtung zum Empfang von Daten auf dem Bussystem auf ihrem Datenübertragungskanal Nachrichtendaten von höchstens einer paketweisen Verbindung auf einmal erhält.

6. Vorrichtung zur Datenübertragung, mit einer Anzahl Übertragungseinrichtungen (SIU) zur Übertragung und zum Empfang von Daten und mit einem Bussystem (B), **gekennzeichnet** durch

ein Bussystem mit einer Anzahl Datenübertragungskanälen, wovon jeder jeweils einer der Übertragungseinrichtungen zugewiesen ist, jeder Datenübertragungskanal zur Übertragung von Nachrichtendaten nur zu der Übertragungseinrichtung dient, für die er unter einer wählbaren der Übertragungseinrichtungen zugewiesen ist ; und eine Anzahl Statusübertragungskanälen im Bussystem, die einer jeweiligen der Übertragungseinrichtungen zugewiesen sind und die sich zur Übertragung von Statusdaten von einer auswählbaren der Übertragungseinrichtungen an alle anderen Übertragungseinrichtungen eignen, um anzugeben, ob der Datenübertragungskanal, der der gleichen Übertragungseinrichtung zugewiesen ist wie der Statusübertragungskanal, zur Übertragung von Nachrichtendaten belegt oder nicht belegt ist.

7. Vorrichtung nach Anspruch 6, dadurch **gekennzeichnet**, dass jede Übertragungseinrichtung Nachrichtendaten auf den Datenübertragungskanälen an höchstens eine andere Übertragungseinrichtung auf einmal überträgt.

8. Vorrichtung nach Anspruch 6, dadurch **gekennzeichnet**, dass jede Übertragungseinrichtung Nachrichtendaten auf den Datenübertragungseinrichtungen von höchstens einer anderen Einrichtung auf einmal empfängt.

9. Vorrichtung nach Anspruch 6, dadurch **gekennzeichnet**, dass die Dtenübertragungskanäle auf verschiedenen Leitern auf einem Datenbus (DB) angeordnet sind, dass der Bus einen einzigen Leiter für jede Übertragungseinrichtung aufweist und dass die Stautsübertragungskanäle auf verschiedenen Leitern in einem Statusbus (OB) angeordnet sind, und der Statusbus einen einzigen Leiter für jede Übertragungseinrichtung umfasst.

10. Vorrichtung nach Anspruch 6 zur paketweisen Übertragung von Nachrichtendaten auf paketweisen Verbindungen, ferner **gekennzeichnet** durch eine Anzahl Verbindungssteuereinheiten (LHU), von denen jede an eine jeweilige externe Verbindung (DL0...DL255) angeschlossen ist, die Verbindungssteuereinheiten in Gruppen über eine Anzahl Verteilerbusse (LHDIB) an eine einer Anzahl Verteilereinheitem (DIU) angeschlossen sind, die über eine jeweilige interne Verbindung (DIPXB0...DIPXB31) an eine jeweilige Übertragungseinrichtung (SIU) angeschlossen sind, um Daten auf mindestens einem Bus zu übertragen und zu empfangen, jede Übertragungseinrichtung eine Verbindungsanschlusseinheit (LT), eine Logikeinheit (LU), einen ersten Buswähler (BS1), einen zweiten Buswähler (BS2), einen dritten Buswähler (BS3) und eine Buswählersteuerung (BSC) umfasst, der erste Buswähler an eine Anzahl Leiter in einem Datenbus (DB) angeschlossen ist, der zweite und dritte Buswähler an eine Anzahl Leiter in einem Statusbus (OB) angeschlossen sind, die Logikeinheit an einen Leiter im Datenbus angeschlossen ist, der einer jeweiligen Übertragungseinrichtung zugewiesen und einzig für diese bestimmt ist, und eine Zeitsteuereinheit (PXCD), die den Übertragungseinrichtungen gemeinsam zur Verfügung steht, um Bit- und Wort-Synchronisiersignale für die Übertragungseinrichtung und die internen Verbindungen zu erzeugen, sowie Zeitzuordnungssignale für die Logikeinheiten der Übertragungseinrichtungen.

## Revendications

1. Un procédé de transmission d'information de message entre un ensemble de moyens de transmission (SIU) au moyen d'un système de bus (B) comportant un ensemble de canaux de transmission, caractérisé en ce que :

on divise les canaux de transmission en canaux de transmission de données et en canaux de transmission d'état ;
on attribue chaque canal de transmission de données et chaque canal de transmission d'état à un moyen de transmission respectif ;
on transmet une information de message à partir d'un premier moyen de transmission d'état vers un second moyen de transmission d'état, seulement sur le canal de transmission de données qui est attribué au second moyen de transmission ; et on transmet une information d'état à partir du premier moyen de transmission vers tous les autres moyens de transmission, sur le canal de transmission d'état qui est attribué au second moyen de transmission, pour indiquer que le canal de transmission de données qui est attribué au second moyen de transmission est occupé.

2. Le procédé selon la revendication 1, dans lequel une information de message est transmise sur les canaux de transmission de données à partir de chaque moyen de transmission vers au plus un autre moyen de transmission à la fois.

3. Le procédé selon la revendication 1, dans lequel une information de message est transmise sur les canaux de transmission de données vers chaque moyen de transmission à partir d'au plus un moyen de transmission à la fois.

4. Le procédé selon la revendication 1, comprenant en outre les étapes suivantes : on détecte une information d'état sur le canal de transmission d'état qui est attribué à un moyen de transmission récepteur, avant une transmission désirée d'information de message à partir d'un moyen de transmission émetteur vers un moyen de transmission récepteur, pour déterminer si le canal de transmission de données du moyen de transmission récepteur est inoccupé ou occupé à cause d'une transmission à partir d'un autre moyen de transmission, et on empêche une transmission désirée d'information de message du moyen de transmission émetteur vers le moyen de transmission récepteur, aussi longtemps que l'information d'état détectée sur le canal de transmission d'état du moyen de transmission récepteur indique que le canal de transmission de données dirigé vers le moyen de transmission récepteur est occupé, à cause de la transmission à partir d'un autre moyen de transmission.

5. Le procédé selon la revendication 1, pour transmettre une information de message sur des connexions fonctionnant en commutation de paquets, dans lequel chaque moyen de transmission qui doit transmettre de l'information sur le système de bus reçoit une information de message qui provient d'au plus une connexion en commutation de paquets à la fois, et chaque moyen de transmission qui doit recevoir de l'information sur le système de bus reçoit sur son canal de transmission de données une information de message qui provient au plus d'une connexion en commutation de paquets à la fois.

6. Appareil pour transmettre de l'information, comprenant :

un ensemble de moyens de transmission (SIU) pour émettre et recevoir de l'information et un système de bus (B), caractérisé par :

un ensemble de canaux de transmission de données établis dans le système de bus, chaque canal étant attribué à l'un respectif des moyens de transmission, et chaque canal de transmission de données étant conçu pour transmettre une information de message seulement vers le moyen de transmission auquel il est attribué, à partir de l'un sélectionné des moyens de transmission ; et

un ensemble de canaux de transmission d'état sur le système de bus, chacun d'eux étant attribué à l'un respectif des moyens de transmission, et étant conçu pour transmettre une information d'état à partir de l'un sélectionné des moyens de transmission vers tous les autres moyens de transmission, pour indiquer si le canal de transmission de données qui est attribué au même moyen de transmission que le canal de transmission d'état est occupé ou inoccupé pour la transmission d'information de message.

7. L'appareil selon la revendication 6, dans lequel chaque moyen de transmission émet une information de message sur les canaux de transmission de données vers au plus un autre moyen de transmission à la fois.

8. L'appareil selon la revendication 6, dans lequel chaque moyen de transmission reçoit une information de message sur les canaux de transmission de données à partir d'au plus un autre moyen à la fois.

9. L'appareil selon la revendication 6, dans lequel les canaux de transmission de données sont établis sur différents conducteurs d'un bus de données (DB), ce bus comprenant un conducteur spécifique pour chaque moyen de transmission, et les canaux de transmission de données sont établis sur différents conducteurs d'un bus d'état (OB), ce bus d'état comprenant un conducteur spécifique pour chaque moyen de transmission.

10. L'appareil selon la revendication 6, pour transmettre une information de message en commutation de paquets sur des connexions en commutation de paquets, comprenant en outre un ensemble d'unités de gestion de maille (LHU), chacune d'elles étant connectée à une maille externe respective (DL0,... DL255), ces unités étant connectées en groupes, par l'intermédiaire d'un ensemble de bus de distribution (LHDIB) à une unité parmi un ensemble d'unités de distribution (DIU), chacune d'elles étant connectée par l'intermédiaire d'une maille interne respective (DIPXB0, ... DIPXB31) à un moyen de transmission respectif (SIU), pour émettre et recevoir de l'information sur au moins un bus, chacun de ces moyens de transmission comprenant une unité de connexion de maille (LT), une unité logique (LU), un premier sélecteur de bus (BS1), un second sélecteur de bus (BS2), un troisième sélecteur de bus (BS3) et une unité de commande de sélecteur de bus (BSC), le premier sélecteur de bus étant connecté à un ensemble de conducteurs dans un bus de données (DB), les second et troisième sélecteurs de bus étant connectés à un ensemble de conducteurs dans un bus d'état (OB), l'unité logique étant connectée à un conducteur dans le bus de données qui est attribué à un moyen de transmission respectif et qui est spécifique de ce moyen de transmission, et une unité de commande de conditions temporelles (PXCD), commune aux moyens de transmission, qui est destinée à générer des signaux de synchronisation de bit et de mot pour les moyens de transmission et les mailles internes, et des signaux d'attribution de temps pour les unités logiques des moyens de transmission.

Fig.1

Fig.2

| WT | $D_0$ | $D_1$ | $D_2$ | $D_3$ | $D_4$ | $D_5$ | $D_6$ | $D_7$ | $D_8$ | $D_9$ | $D_{10}$ | $D_{11}$ | $D_{12}$ | $D_{13}$ | $D_{14}$ | $D_{15}$ | X | Y | P |
|---|---|---|---|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 | 16 | 17 | 18 | 19 |

Fig 3a

| WT | C | AT | $A_0$ | $A_1$ | $A_2$ | $A_3$ | $A_4$ | $A_5$ | $A_6$ | $A_7$ | $A_8$ | $A_9$ | $A_{10}$ | $A_{11}$ | $A_{12}$ | $A_{13}$ | X | Y | P |
|---|---|---|---|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 | 16 | 17 | 18 | 19 |

Fig 3b

| WT | $D_0$ | $D_1$ | $D_2$ | $D_3$ | $D_4$ | $D_5$ | $D_6$ | $D_7$ | $D_8$ | $D_9$ | $D_{10}$ | $D_{11}$ | $D_{12}$ | $D_{13}$ | $D_{14}$ | $D_{15}$ | R | B | P |
|---|---|---|---|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 | 16 | 17 | 18 | 19 |

Fig 3c

| WT | C | AT | $A_0$ | $A_1$ | $A_2$ | $A_3$ | $A_4$ | $A_5$ | $A_6$ | $A_7$ | $A_8$ | $A_9$ | $A_{10}$ | $A_{11}$ | $A_{12}$ | $A_{13}$ | R | B | P |
|---|---|---|---|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 | 16 | 17 | 18 | 19 |

Fig 3d

18

Fig.4

WCXL

ORD  W0  W1  W2  W3

- P0
- P1
- P2
- P3
- P4
- P5
- P6
- P7
- P8
- P9
- P10
- P11

- P29
- P30
- P31

Fig.5

EP 0 280 670 B1

Fig.6

EP 0 280 670 B1